# NEUE EUROPÄISCHE PATENTSCHRIFT

(11) **EP 2 051 817 B2**
(45) Veröffentlichungstag und Bekanntmachung des Hinweises auf die Entscheidung über den Einspruch: **07.09.2016**
(45) Hinweis auf die Patenterteilung: 18.11.2009
(21) Anmeldenummer: 08785097.0
(22) Anmeldetag: 25.07.2008
(51) Int. Cl.: B05C 5/00

(54) **APPLIKATOR UND APPLIKATIONSVERFARHEN ZUR APPLIKATION EINER DICHTMASSE AUF EINE BÖRDELNAHT**
APPLICATOR AND APPLICATION METHOD FOR APPLYING A SEALANT TO A FLANGED SEAM
APPLICATEUR ET PROCÉDÉ D'APPLICATION DESTINÉS À APPLIQUER UNE PÂTE D'ÉTANCHÉITÉ SUR UN CORDON DE BORDURE

(30) Priorität: 10.08.2007 DE 102007037865
(43) Veröffentlichungstag der Anmeldung: 29.04.2009
(73) Patentinhaber: Dürr Systems GmbH, 74321 Bietigheim-Bissingen (DE)
(72) Erfinder: RADEMACHER, Lothar, 74321 Bietigheim-Bissingen (DE); SMAJLOVIC, Almir, 70180 Stuttgart (DE)
(74) Vertreter: Beier, Ralph
(86) Internationale Anmeldenummer: PCT/EP2008/006144
(87) Internationale Veröffentlichungsnummer: WO 2009/021609

(56) Entgegenhaltungen:
- EP-A1- 1 238 713
- EP-A2- 1 375 008
- EP-B1- 0 559 106
- WO-A1-99/22401
- DE-A1- 3 912 920
- DE-A1- 19 936 716
- DE-B4-102004 039 684
- JP-A- 5 115 825
- JP-A- 2005 122 027

## Beschreibung

Die Erfindung betrifft einen Applikator zur Applikation eines Beschichtungsmittels, insbesondere einer Dichtmasse, auf ein Bauteil, insbesondere auf eine Bördelnaht eines Kraftfahrzeug-Karosseriebauteils, sowie ein entsprechendes Applikationsverfahren gemäß den nebengeordneten Ansprüchen.

Weiterhin umfasst die Erfindung einen Beschichtungsroboter mit einem erfindungsgemäßen Applikator sowie die neuartige Verwendung eines erfindungsgemäßen Applikators in einer Beschichtungseinrichtung.

Aus DE 10 2004 039 684 B4 und JP 2005 122 027 A sind Applikatoren bekannt, die eine translatorische Ausweichbewegung einer Applikationsdüse ermöglichen. Zum einen sind diese Applikatoren jedoch nicht geeignet, eine Dichtmasse auf eine Bördelnaht eines Kraftfahrzeug-Karosseriebauteils aufzubringen. Zum anderen ermöglichen diese bekannten Applikatoren lediglich eine translatorische Ausweichbewegung der Applikationsdüse relativ zu dem beschichteten Bauteil.

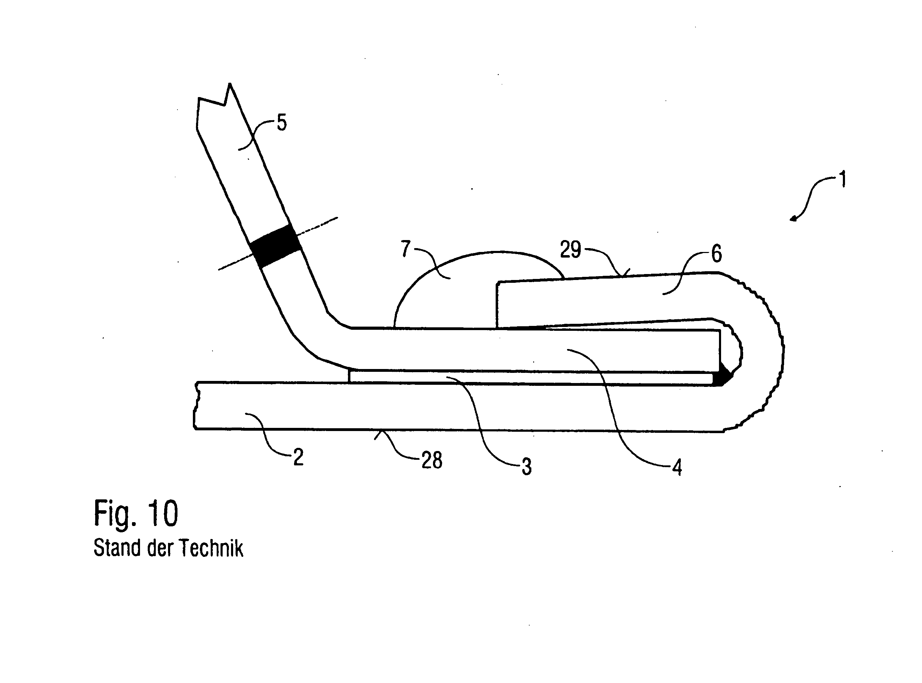

In Figur 10 (Stand der Technik) ist exemplarisch eine Bördelnaht 1 dargestellt, wie sie Kraftfahrzeug-Karosseriebauteile, wie beispielsweise Türen oder Hauben, oftmals aufweisen. Hierbei ist eine Blechbeplankung 2 durch eine Klebstoffschicht 3 mit einer angewinkelten Bleckkante 4 eines Innenblechs 5 verklebt, wobei eine Blechkante 6 der Blechbeplankung 2 U-förmig um die Blechkante 4 des Innenblechs 5 herum angewinkelt ist und auf der Rückseite der Blechkante 4 des Innenblechs 5 aufliegt. Hierbei besteht die Gefahr, dass Feuchtigkeit in den Spalt zwischen der Blechkante 6 der Blechbeplankung 2 und der Blechkante 4 des Innenblechs 5 eindringt und dort zu Korrosion führt. Es ist deshalb weiterhin bekannt, eine Dichtmasse 7 auf die Nahtstelle zwischen der Blechkante 6 der Blechbeplankung 2 und der Blechkante 4 des Innenblechs 5 aufzubringen, wobei sich die Dichtmasse 7 über die gesamte Länge der Nahtstelle erstrecken muss, um das Eindringen von Feuchtigkeit und damit verbundene Korrosion sicher zu verhindern.

Die Applikation der Dichtmasse 7 erfolgt bei der Beschichtung von Türen von Kraftfahrzeugkarosserien in der Praxis manuell durch Werker, die zunächst die jeweilige Tür öffnen und dann die Dichtmasse 7 manuell auf die Nahtstelle auftragen.

Es gibt auch Arbeitsverfahren, bei denen der Werker die Bördelnaht 1 bei geschlossener Türe aufträgt. Hierbei verwendet das manuell geführte Werkzeug auch die äußere Fläche des Bauteils als Führung.

Nachteilig an der manuellen Applikation der Dichtmasse 7 auf die Bördelnaht 1 sind jedoch der hohe personelle Aufwand und die damit verbundenen Kosten.

Darüber hinaus wurden bereits Versuche unternommen, um die Dichtmasse 7 automatisch durch einen Beschichtungsroboter auf die Bördelnaht 1 aufzubringen. Diese Versuche zur Automatisierung der Applikation der Dichtmasse 7 sind jedoch bisher in der Praxis aus verschiedenen Gründen mit erheblichen Problemen verbunden.

Zum einen konnte die Dichtmasse 7 bei Türen und Hauben von Kraftfahrzeugkarosserien nur dann auf die Bördelnaht 1 aufgebracht werden, wenn die Türen bzw. Hauben zuvor geöffnet werden, was mit einem zusätzlichen Aufwand verbunden ist.

Zum anderen erfordert die Applikation der Dichtmasse 7 auf die Bördelnaht 1 eine extrem hohe Positionierungsgenauigkeit des verwendeten Beschichtungsroboters, die nur durch eine sensorgestützte Positionsregelung mit einer Nachführung der Roboterposition entsprechend den ermittelten Positionsabweichungen möglich ist. Bei einer automatischen Applikation der Dichtmasse 7 auf die Bördelnaht 1 stellt der apparative Aufwand zur Erreichung der erforderlichen Positionierungsgenauigkeit die aufgrund der Personaleinsparung erzielbare Wirtschaftlichkeit in Frage.

Weiterhin ist aus JP 05115825 A ein Applikator bekannt, bei dem die Düse jedoch nicht durch ein Drehoder Schwenkgelenk geführt ist und deshalb keine Ausweichbewegung ermöglicht, die bei der Applikation einer Dichtmasse auf eine Bördelnaht erforderlich ist.

Der Erfindung liegt deshalb die Aufgabe zugrunde, bei einer Bördelnaht möglichst wirtschaftlich die Dichtmasse zur Abdichtung der Bördelnaht aufzubringen.

Diese Aufgabe wird durch einen erfindungsgemäßen Applikator, ein erfindungsgemäßes Applikationsverfahren, einen erfindungsgemäßen Beschichtungsroboter und durch die erfindungsgemäße Verwendung des Applikators gemäß den nebengeordneten Ansprüchen gelöst.

Die Erfindung sieht vor, dass die Dichtmasse mittels eines Roboters auf die Bördelnaht aufgebracht wird, wie es an sich bereits aus den vorstehend beschriebenen Automatisierungsversuchen bekannt ist. Hierzu ist ein Applikator vorgesehen, der einen Grundkörper (z.B. einen Befestigungsflansch) aufweist, der im Betrieb von einem mehrachsigen Roboter geführt wird. Darüber hinaus weist der Applikator eine Düse auf, um die Dichtmasse auf die Bördelnaht zu applizieren. Die Erfindung verringert nun die erforderliche Positionierungsgenauigkeit des verwendeten Roboters deutlich, indem der Applikatorzusätzlich ein nachgiebiges Gelenk aufweist, das kinematisch zwischen dem Grundkörper und der Düse angeordnet ist und eine Ausweichbewegung der Düse relativ zu dem Grundkörper erlaubt. Durch diese Ausweichbewegung der Düse sinken die Anforderungen an die Positionierungsgenauigkeit des verwendeten Roboters, da das Gelenk und damit die Düse nachgeben kann, wenn die Düse aufgrund einer ungenauen Positionierung durch den Roboter gegen das zu beschichtende Bauteil stößt.

Bei dem Gelenk handelt es sich um ein Drehgelenk, das eine Drehung der Düse relativ zu dem Grundkörper ermöglicht. Alternativ besteht jedoch auch die Möglichkeit, dass das Gelenk ein Schwenkgelenk ist, das eine Schwenkbewegung der Düse relativ zu dem Grundkörper ermöglicht. Die Erfindung ist jedoch hinsichtlich des Typs des Gelenks nicht auf die beiden vorstehend genannten Gelenktypen beschränkt, sondern auch mit andren Gelenktypen realisierbar.

Vorzugsweise stellt der im Rahmen der Erfindung verwendete Begriff eines Roboters auf einen mehrachsigen Roboter ab, der beispielsweise 5, 6 oder 7 Achsen und/oder eine Handachse mit beispielsweise 2, 3 oder 4 Achsen aufweist. Der im Rahmen der Erfindung verwendete Begriff eines Roboters ist jedoch nicht auf derartige mehrachsige Roboterbeschränkt, sondern umfasst auch andere, Arten von Manipulatoren, die es ermöglichen, den Applikator entlang der abzudichtenden Bördelnaht zu bewegen, wie beispielsweise Roboter mit einer Parallelkinematik oder einer Kombination aus bekannten Roboterkinematiken wie z.B. der Kombination aus paralleler und serieller Kinematik.

Ferner besteht im Rahmen der Erfindung auch die Möglichkeit, dass der Applikator räumlich fixiert ist, während das zu beschichtende Bauteil (z.B. eine Fahrzeugtür) relativ zu dem Applikator bewegt wird.

Weiterhin ist die Erfindung nicht auf die vorstehend beschriebene Applikation von Dichtmasse auf eine Bördelnaht eines Kraftfahrzeug-Karosseriebauteils beschränkt. Vielmehr eignet sich die Erfindung auch zur Applikation anderer Beschichtungsmittel, die an sich aus dem Stand der Technik bekannt sind.

Ferner ist zu erwähnen, dass die Erfindung hinsichtlich des zu beschichtenden Bauteils nicht auf Kraftfahrzeug-Karosseriebauteile beschränkt ist, wie beispielsweise Türen und Hauben von Kraftfahrzeugkarosserien. Vielmehr eignet sich die Erfindung auch zur Beschichtung anderer Bauteile aus verschiedenen Gebieten der Technik.

Der im Rahmen der Erfindung verwendete Begriff eines Grundkörpers umfasst vorzugsweise einen Befestigungsflansch zur Befestigung des Applikators an einer Roboterhandachse oder einem Roboterarm. Der Grundkörperkannjedoch im Rahmen der Erfindung auch andere Bauteile des Applikators enthalten.

Weiterhin umfasst der erfindungsgemäße Applikator vorzugsweise mindestens ein Federelement, welches das nachgiebige Gelenk und damit die Düse in eine vorgegebene Neutralstellung relativ zu dem Grundkörper zurückstellt, wenn keine äußeren Kräfte auf die Düse einwirken.

In einem bevorzugten Ausführungsbeispiel der Erfindung ist weiterhin vorgesehen, dass der erfindungsgemäße Applikator mindestens eine drehbare Andruckrolle aufweist, die im Betrieb auf der Oberfläche des zu beschichtenden Bauteils abrollt, wobei die Abrollfläche auf dem zu beschichtenden Bauteil einerseits und die Applikationsseite, auf der die Applikation des Beschichtungsmiftels erfolgt, andererseitsvorzugsweise einander gegenüberliegen. Der erfindungsgemäße Applikator rollt also in diesem Ausführungsbeispiel mit seinen Andruckrollen auf der einen Seite des zu beschichtenden Bauteils ab, während der Applikator das Bauteil auf der gegenüberliegenden Seite mit dem Beschichtungsmittel beschichtet.

In einem anderen Ausführungsbeispiel der Erfindung weist der Applikator anstelle der Andruckrollen mindestens eine Gleitfläche auf, die im Betrieb auf der Oberfläche des zu beschichtenden Bauteils gleitet. Hierbei gleitet der Applikator vorzugsweise auf derjenigen Seite des zu beschichtenden Bauteils, die auch mit dem Beschichtungsmittel beschichtet wird.

Bei den zuvor erwähnten Ausführungsbeispielen mit einer Andruckrolle besteht die Andruckrolle vorzugsweise aus einem weichen Material (z.B. Kunststoff), um Kratzer auf dem zu beschichtenden Bauteil zu verhindern. Alternativ besteht auch die Möglichkeit, dass die Andruckrolle lediglich mit einem weichen Material überzogen ist, um die Bildung von Kratzern in der Oberfläche des zu beschichtenden Bauteils zu verhindern.

In einem bevorzugten Ausführungsbeispiel der Erfindung weisen die Andruckrolle und das Gelenk Drehachsen auf, die im Wesentlichen parallel verlaufen. Eine derartige geometrische Anordnung der Achsen der Andruckrolle und des Gelenks ist insbesondere dann vorgesehen, wenn die Andruckrollen auf dereinen Seite des zu beschichtenden Bauteils abrollen, während die Düse das Beschichtungsmittel auf der gegenüberliegenden Seite des zu beschichtenden Bauteils appliziert.

Vorzugsweise sind die Andruckrolle und die Düse hierbei starr miteinander verbunden und können durch das Gelenk gemeinsam relativ zu dem Grundkörper (z.B. Befestigungsflansch) verschwenkt werden.

Die starre Verbindung zwischen den Andruckrollen und der Düse kann hierbei durch eine Andruckwippe erreicht werden, die durch das Gelenk um eine vorgegebene Drehachse schwenkbar an dem Grundkörper angebracht ist und die Düse sowie beiderseits der Drehachse jeweils mindestens eine Andruckrolle trägt, wobei die Andruckrollen eine gemeinsame Abrollfläche bilden. Die beiden Andruckrollen rollen hierbei also auf dereinen Seite des zu beschichtenden Bauteils ab und sorgen hierbei gleichzeitig für eine bestimmte räumliche Orientierung der Düse auf der gegenüberliegenden Seite des zu beschichtenden Bauteils.

Falls der Applikator eine Gleitfläche aufweist, die im Betrieb auf der Oberfläche des zu beschichtenden Bauteils gleitet, so ist es vorteilhaft, wenn die Gleitfläche in Gleitrichtung vorne und/oder hinten eine angewinkelte Auflauffläche bzw. Ablauffläche aufweist, um Oberflächenkonturen des zu beschichtenden Bauteils auszugleichen. Die angewinkelte Auflauffläche bzw. Ablauffläche kann gegenüber der eigentlichen Gleitfläche beispielsweise einen Anstellwinkel im Bereich von 5°-45° aufweisen, wobei sich ein Anstellwinkel von ungefähr30° als besonders vorteilhaft erwiesen hat. Die Erfindung ist jedoch hinsichtlich des Anstellwinkels der Auflauffläche bzw. der Ablauffläche gegenüber der Gleitfläche nicht auf den vorstehend genannten Wertebereich beschränkt, sondern grundsätzlich auch mit anderen Anstellwinkeln realisierbar.

Weiterhin weist der erfindungsgemäße Applikator zur Zuführung des Beschichtungsmittels ein Düsenrohr mit einem proximalen Rohrabschnitt und einem distalen Rohrabschnitt auf, wobei der distale Rohrabschnitt gegenüber dem proximalen Rohrabschnitt angewinkelt ist, um das zu beschichtende Bauteil zu hintergreifen, während die Düse und/oder die Düsenöffnung in dem distalen Rohrabschnitt angeordnet und nach innen ausgerichtet ist, um das Bauteil von hinten zu beschichten. Die Anwinkelung des distalen Rohrabschnitts gegenüber dem proximalen Rohrabschnitt des Düsenrohrs ermöglicht es hierbei, dass der Applikator auf der Vorderseite des zu beschichtenden Bauteils geführt wird und trotzdem die Rückseite des Bauteils beschichtet.

Vorzugsweise ist das Düsenrohr deshalb im Wesentlichen L-förmig oder U-förmig, jedoch sind auch andere gebogene oder gekrümmte Formen des Düsenrohrs möglich.

Im Rahmen der Erfindung besteht die Möglichkeit, dass die Düse das Beschichtungsmittel im Wesentlichen rechtwinklig auf die Oberfläche des zu beschichtenden Bauteils appliziert. Es hat sich jedoch als besonders vorteilhaft erwiesen, wenn die Düse des erfindungsgemäßen Applikators eine Austrittsrichtung aufweist, die im Betrieb gegenüber der Oberfläche des zu beschichtenden Bauteils einen bestimmten Anstellwinkel aufweist, wobei der Anstellwinkel vorzugsweise im Bereich zwischen 10° und 90° liegt, so dass das Beschichtungsmittel schräg auf die Oberfläche des zu beschichtenden Bauteils aufgetragen wird. Die Erfindung ist jedoch hinsichtlich des Anstellwinkels zwischen dem Düsenstrahl und der Oberfläche des zu beschichtenden Bauteils nicht auf den vorstehend genannten Wertebereich beschränkt, sondern grundsätzlich auch mit anderen Anstellwinkeln realisierbar.

Vorzugsweise ist die Düse hierbei entgegen der Vorschubrichtung des Applikators ausgerichtet. Dies bedeutet, dass das Beschichtungsmittel bezüglich der Vorschubrichtung des Applikators nach hinten aus dem Applikator abgegeben wird. Die Erfindung ist jedoch nicht auf diese Ausrichtung der Düse beschränkt. Vielmehr ist es grundsätzlich auch möglich, dass die Düse in Vorschubrichtung oder quer zur Vorschubrichtung des Applikators ausgerichtet ist.

Die Ausführung der Düsenöffnung kann in verschiedenen Größen erfolgen. Dies wird maßgeblich von der zu erzielenden Geometrie der Dichtraupe vorgegeben. Um die Anforderung an verschiedene Dichtraupengeometrien zu erfüllen, können verschiedene Applikationsverfahren, wie z.B. Rundstrahl oder Extrusion, zum Einsatz kommen, wobei die Erfindung nicht auf diese Verfahren beschränkt ist.

Weiterhin ist es vorteilhaft, wenn das Düsenrohr auswechselbar ist, so dass der Applikator durch einen Austausch des Düsenrohrs einfach an veränderte Bauteilgeometrien angepasst werden kann.

Darüber hinaus ist in einem bevorzugten Ausführungsbeispiel der Erfindung vorgesehen, dass die Düse und/oderdas Düsenrohreinen stoßmindernden Überzug aufweist, der beispielsweise aus Gummi oder einem Kunststoff bestehen kann.

In einer Variante der Erfindung weist der Applikator einen hohlen Arm und einen Düsenkopf auf, der an dem Arm schwenkbar angebracht ist und die Düse enthält. Hierbei verläuft in dem hohlen Arm vorzugsweise ein Beschichtungsmittelschlauch bzw. eine Beschichtungsmittelleftung, um das zu applizierende Beschichtungsmittel zu dem Düsenkopf und der darin befindlichen Düse zu transportieren.

Weiterhin ist hierbei vorzugsweise ein Federelement vorgesehen, um den kompletten Düsenkopf mit der Düse ohne äußere Kräfte in die Neutralstellung zurückzustellen. Das Federelement kann hierbei wahlweise in dem hohlen Arm oderaußen an derSeite des hohlen Arms angeordnet sein.

Ferner ist es vorteilhaft, wenn eine Beschichtungsmittelzuführung innerhalb des Grundkörpers des erfindungsgemäßen Applikators verläuft, so dass auf auβen liegende Schläuche oder Leitungen verzichtet werden kann.

Zu dem nachgiebigen Gelenk ist weiterhin zu erwähnen, dass das Gelenk mindestens eine rotatorische Ausweichbewegung und optional mindestens eine translatorische Ausweichbewegung der Düse relativ zu dem Grundkörper erlaubt. In einem bevorzugten Ausführungsbeispiel der Erfindung ermöglicht das Gelenk zwei oder drei translatorische Ausweichbewegungen und eine rotatorische Ausweichbewegung.

Die erste translatorische Ausweichbewegung der Düse ist vorzugsweise rechtwinklig ausgerichtet in Bezug auf die Oberfläche des zu beschichtenden Bauteils, die Abrollfläche der Andruckrollen bzw. den distalen Rohrabschnitt des Düsenrohrs.

Die zweite translatorische Ausweichbewegung ist dagegen vorzugsweise parallel ausgerichtet in Bezug auf die Oberfläche des zu beschichtenden Bauteils, die Abrollfläche der Andruckrollen bzw. den distalen Rohrabschnitt des Düsenrohrs.

Schließlich erfolgt die rotatorische Ausweichbewegung der Düse in einer Drehebene, die im wesentlichen rechtwinklig ausgerichtet ist in Bezug auf den distalen Rohrabschnitt des Düsenrohrs.

Ferner ist zu erwähnen, dass die Erfindung nicht nur den vorstehend beschriebenen erfindungsgemäßen Applikator als einzelnes Bauteil umfasst. Vielmehr umfasst die Erfindung auch einen vollständigen Beschichtungsroboter mit einem derartigen Applikator.

Darüber hinaus umfasst die Erfindung auch ein entsprechendes Applikationsverfahren, wie es sich bereits aus der vorstehenden Beschreibung des erfindungemäßen Applikators ergibt.

Bei der Applikation einer Dichtmasse auf eine Bördelnaht einer Tür oder einer Haube einer Kraftfahrzeugkarosserie sieht das erfindungsgemäße Applikationsverfahren vorzugsweise vor, dass die Dichtmasse auf die Bördelnaht aufgetragen wird, während die Tür bzw. Haube geschlossen ist. Dies ist vorteilhaft, weil dann auf das Öffnen der Tür bzw. Haube verzichtet werden kann.

Darüber hinaus wird die Dichtmasse hierbei von einer Außenseite der Tür bzw. Haube zugeführt und dann auf die an der Innenseite der Tür bzw. Haube befindliche Bördelnaht aufgebracht.

Hierzu wird die Düse vorzugsweise von außen durch einen Karosseriespalt hindurch von der Außenseite auf die Innenseite der Tür bzw. Haube geführt, woraufhin die Düse dann die Bördelnaht an der Innenseite der Tür bzw. Haube abdichten kann.

Alternativ besteht die Möglichkeit, dass die Düse um eine Kante der Tür bzw. Haube herum von der Außenseite auf die Innenseite der Tür bzw. Haube geführt wird, um die dort befindliche Bördelnaht abzudichten.

Darüber hinaus ist zu erwähnen, dass der erfindungsgemäße Applikator mit einer bestimmten Positionierungstoleranz bewegt wird, wobei das Gelenk des erfindungsgemäßen Applikators einen bestimmten Toleranzausgleich ermöglicht. Der Toleranzausgleich des Gelenks ist hierbei vorzugsweise größer als die Positionierungstoleranz des Applikators, damit das Gelenk alle möglichen Positionierungsfehler des Roboters ausgleichen kann.

Schließlich umfasst die Erfindung nicht nur den vorstehend beschriebenen Applikator und ein entsprechenden Applikationsverfahren, sondern auch die neuartige Verwendung eines derartigen Applikators zur Applikation eines Dichtmittels auf eine Bördelnaht eines Kraftfahrzeug-Karosseriebauteils.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Figuren näher erläutert. Es zeigen:
- Figur 1:: eine perspektivische Ansicht eines Applikationswerkzeugs eines erfindungsgemäßen Applikators,
- Figur 2:: eine Aufsicht auf das Applikationswerkzeug gemäß Figur 1,
- Figur 3:: eine Querschnittsansicht des Applikationswerkzeugs gemäß Figur 2 entlang der Linie A-A in Figur 2,
- Figur 4:: eine Seitenansicht eines erfindungsgemäßen Applikators mit dem Applikationswerkzeug gemäß den Figuren 1 bis 3 und einem zusätzlichen Toleranzausgleich,
- Figur 5:: eine perspektivische, teilweise aufgerissene Darstellung eines anderen Ausführungsbeispiels eines nicht erfindungsgemäßen Applikators,
- Figur 6:: eine weitere Abwandlung eines nicht erfindungsgemäßen Applikators in einer perspektivischen, teilweise aufgerissenen Darstellung,
- Figur 7:: eine Unteransicht des Applikators aus Figur 6,
- Figur 8:: eine nicht erfindungsgemäße Abwandlung des Ausführungsbeispiels aus den Figuren 6 und 7 mit einer innen liegenden Feder,
- Figur 9:: eine perspektivische Teildarstellung eines schwenkbaren Düsenkopfs für das Ausführungsbeispiel gemäß Figur 8 sowie
- Figur 10:: eine Querschnittsansicht durch eine Bördelnaht (Stand der Technik).

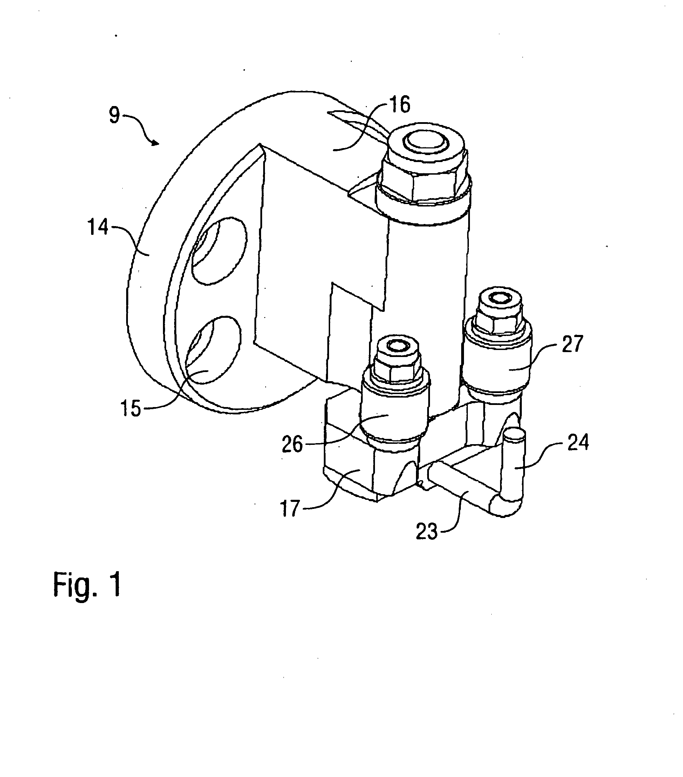

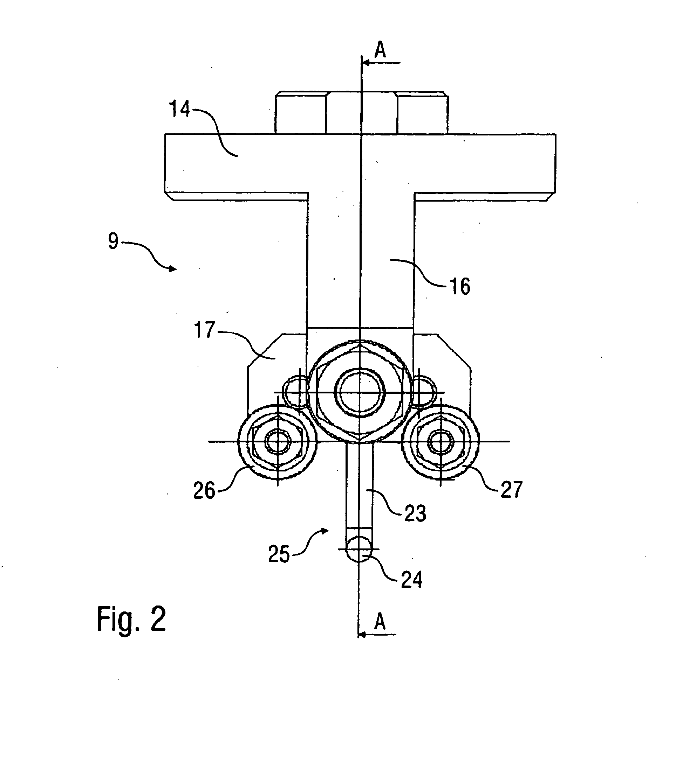

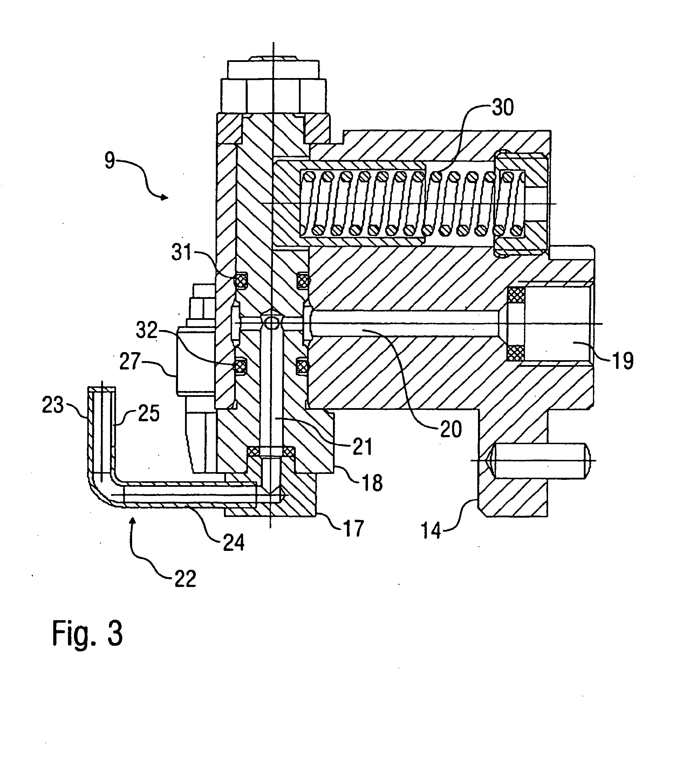

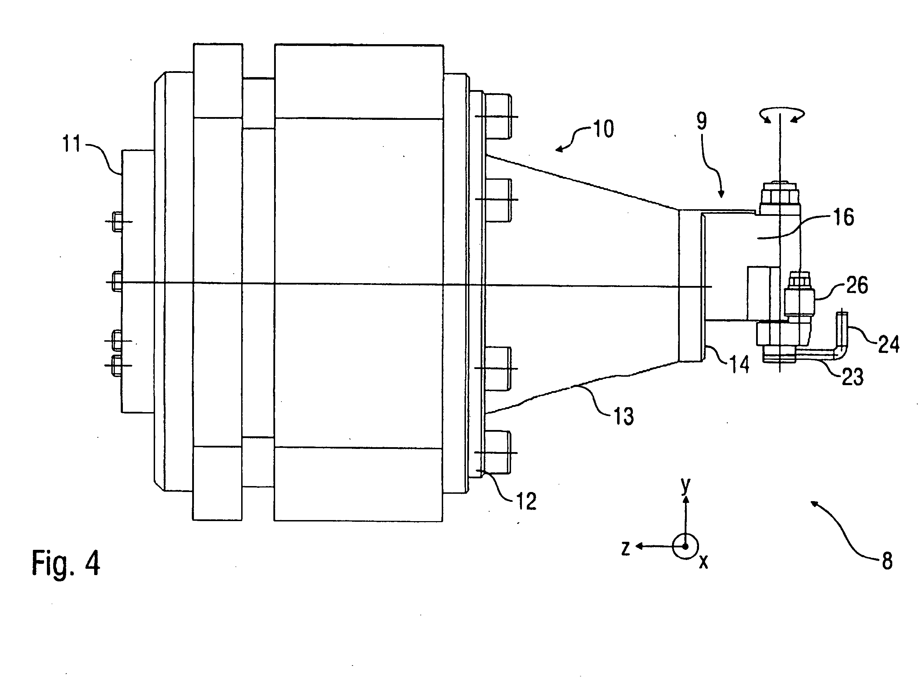

Die Figuren 1 bis 4 zeigen einen erfindungsgemäßen Applikator 8, der im Wesentlichen aus einem Applikationswerkzeug 9 und einem Toleranzausgleich 10 besteht und verwendet werden kann, um die Dichtmasse 7 auf die Bördelnaht 1 aufzutragen, wie aus Figur 10 ersichtlich ist.

Der Toleranzausgleich 10 weist einen Befestigungsflansch 11 auf, mit dem der Applikator 8 an einem Roboterflansch einer Roboterhandachse eines 6-achsigen Roboters befestigt werden kann. Im Betrieb wird der Applikator 8 also von dem mehrachsigen Roboter entlang derzu beschichtenden Bördelnaht 1 geführt, wobei der Applikator 8 die Dichtmasse 7 abgibt, wie noch detailliert beschrieben wird.

Auf der dem Applikationswerkzeug 9 zugewandten Seite weist derToleranzausgleich 10 einen weiteren Befestigungsflansch 12 auf, der über ein konisches Verbindungsstück 13 mit dem Applikationswerkzeug 9 verbunden ist.

Der Toleranzausgleich 10 ermöglicht hierbei Ausweichbewegungen des Befestigungsflansches 12 und damit auch des kompletten Applikationswerkzeugs 9 relativ zu dem roboterseitigen Befestigungsflansch 11 in Y-Richtung, in Z-Richtung und in X-Richtung, wobei die X-Richtung rechtwinklig zur Zeichnungsebene ausgerichtet ist.

Das Applikationswerkzeug 9 ist detailliert in den Figuren 1 bis 3 beschrieben und wird im Folgenden eingehend erläutert.

Zur Verbindung mit dem konischen Verbindungsstück 13 weist das Applikationswerkzeug 9 einen Befestigungsflansch 14 auf, wobei der Befestigungsflansch 14 mehrere Bohrungen 15 aufweist, um den Befestigungsflansch 14 des Applikationswerkzeugs 9 mit dem konischen Verbindungsstück 13 des Toleranzausgleichs 10 zu verschrauben.

Weiterhin weist das Applikationswerkzeug einen Materialsteg 16 auf, der von dem Befestigungsflansch 14 rechtwinklig nach vorne absteht und eine drehbare Lagerung für eine Andruckwippe 17 bildet.

Hierzu weist der Materialsteg 16 eine senkrechte Bohrung auf, in derein Drehkörper 18 drehbargelagert ist, wobei der Drehkörper 18 an seiner Unterseite die Andruckwippe 17 trägt.

Weiterhin weist der Befestigungsflansch 14 des Applikationswerkzeugs 9 eine mittige Bohrung 19 auf, über die die zu applizierende Dichtmasse 7 durch den Toleranzausgleich 10 hindurch zugeführt wird.

Die Bohrung 19 in dem Befestigungsflansch 14 mündet in eine fortgesetzte, axial fluchtende Bohrung 20 in dem Materialsteg 16.

In dem Drehkörper 18 befindet sich ebenfalls eine Bohrung 21, die durch eine radial verlaufende Stichbohrung mit der Bohrung 20 in dem Materialsteg 16 verbunden ist.

Die Bohrung 21 in dem Drehkörper 18 mündet wiederum in eine entsprechende Bohrung in der Andruckwippe 17, wobei diese Bohrung in ein auswechselbares Düsenrohr 22 mündet.

Das Düsenrohr 22 weist einen proximalen Rohrabschnitt 23 und einen distalen Rohrabschnitt 24 auf, wobei der distale Rohrabschnitt 24 um 90° gegenüber dem proximalen Rohrabschnitt 23 angewinkelt ist und an seiner Innenseite eine Düse 25 aufweist.

Im Betrieb wird die Dichtmasse 7 also über die Roboterhandachse durch den Toleranzausgleich 10 hindurch und dann durch die Bohrungen 19-21 zu dem Düsenrohr 22 transportiert, wo die Dichtmasse 7 schließlich das Düsenrohr 22 durch die Düse 25 verlässt.

An der Andruckwippe 17 sind weiterhin zwei Andruckrollen 26, 27 drehbar gelagert, wobei die Andruckrollen 26, 27 im Betrieb auf einer Vorderseite 28 (vgl. Fig. 10) des abzudichtenden Bauteils rechtwinklig zur Zeichenebene abrollen. Durch diesen Rollkontakt zwischen den beiden Andruckrollen 26, 27 und der Vorderseite 28 der Blechbeplankung 2 wird erreicht, dass die Düse 25 in einer vorgegebenen Position an einer Rückseite 29 der Bördelnaht 1 gehalten wird, um die Dichtmasse 7 sauber und genau applizieren zu können.

Dabei ermöglicht der Toleranzausgleich 10 Ausweichbewegungen des Applikationswerkzeugs 9 in X-Richtung, in Y-Richtung sowie in Z-Richtung, wodurch die Anforderungen an die Positionierungsgenauigkeit des verwendeten Roboters herabgesetzt werden.

Weiterhin weist das Applikationswerkzeug 9 eine Spiralfeder 30 auf, die radial in eine entsprechend angepasste Aufnahme in dem Drehkörper 18 drückt und den Drehkörper 18 dadurch in eine Neutralstellung zurückstellt, wenn keine äußeren Kräfte auf die Andruckrollen 26, 27 wirken.

Ferner weist das Applikationswerkzeug oberhalb und unterhalb der radialen Stichbohrung in dem Drehkörper 18 zwei Dichtringe 31,32 auf, um den Ringspalt zwischen dem Drehkörper 18 und der entsprechenden Bohrung in dem Materialsteg 16 nach oben und nach unten abzudichten.

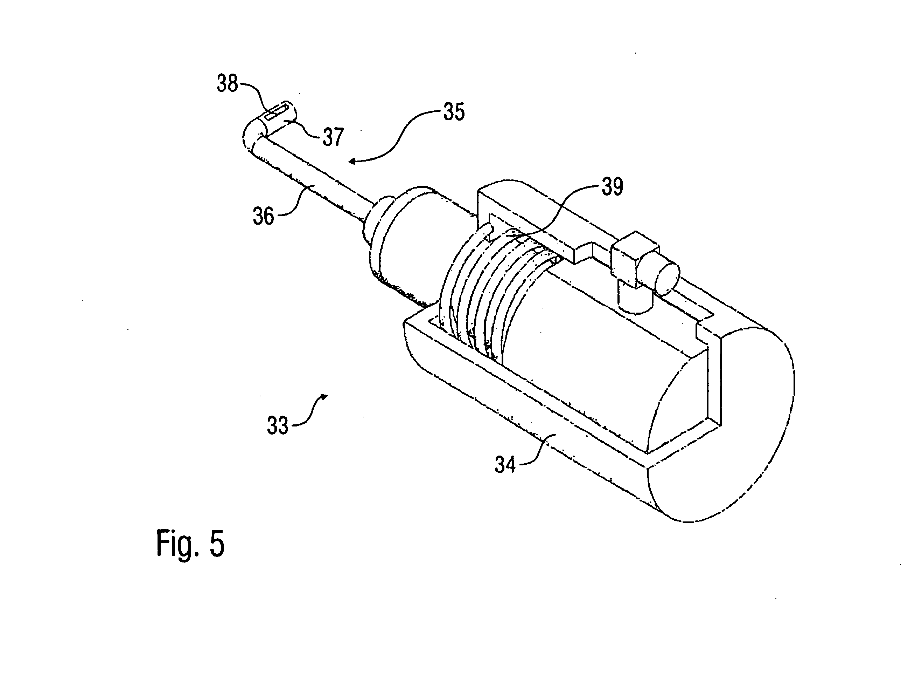

Figur 5 zeigt ein alternatives Ausführungsbeispiel eines nicht erfindungsgemäßen Applikators 33, der zur Applikation der Dichtmasse 7 auf die Bördelnaht 1 (vgl. Fig. 10) eingesetzt werden kann.

Der Applikator 33 besteht im Wesentlichen aus einem Grundkörper 34 und einem translatorisch nachgiebig gelagerten Düsenrohr 35, wobei das Düsenrohr 35 einen proximalen Rohrabschnitt 36 und einen distalen Rohrabschnitt 37 aufweist. Der distale Rohrabschnitt 37 ist hierbei um 90° gegenüber dem proximalen Rohrabschnitt 36 angewinkelt und weist eine Düse 38 auf, durch die die Dichtmasse 7 appliziert werden kann.

Im Betrieb gleitet der distale Düsenabschnitt 37 auf der Rückseite 29 (vgl. Fig. 10) der Bördelnaht 1, wobei die Düse 38 die Dichtmasse 7 appliziert.

In dem Grundkörper 34 ist hierbei ein translatorisches Gelenk angeordnet, das eine translatorische Ausweichbewegung des Düsenrohrs 35 relativ zu dem Grundkörper 34 ermöglichen.

Darüber hinaus ist in dem Grundkörper 34 eine Spiralfeder 39 angeordnet, die das Düsenrohr 35 in eine translatorische Neutralstellung zurückstellt, wenn keine äußeren Kräfte auf das Düsenrohr 35 wirken, d.h. wenn kein Berührungskontakt zwischen dem distalen Rohrabschnitt 37 und der Rückseite 29 der Bördelnaht 1 besteht.

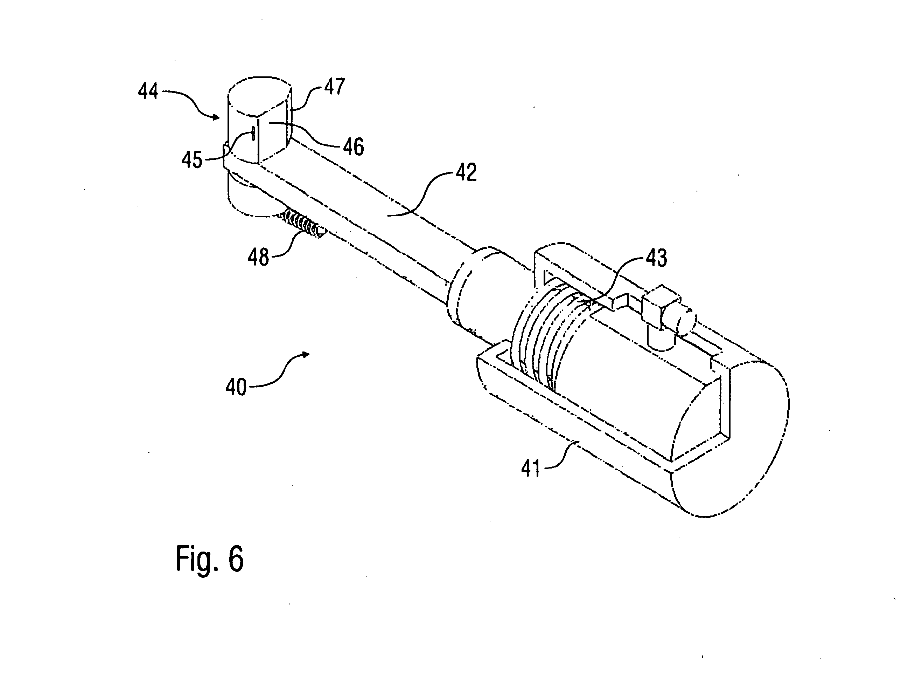

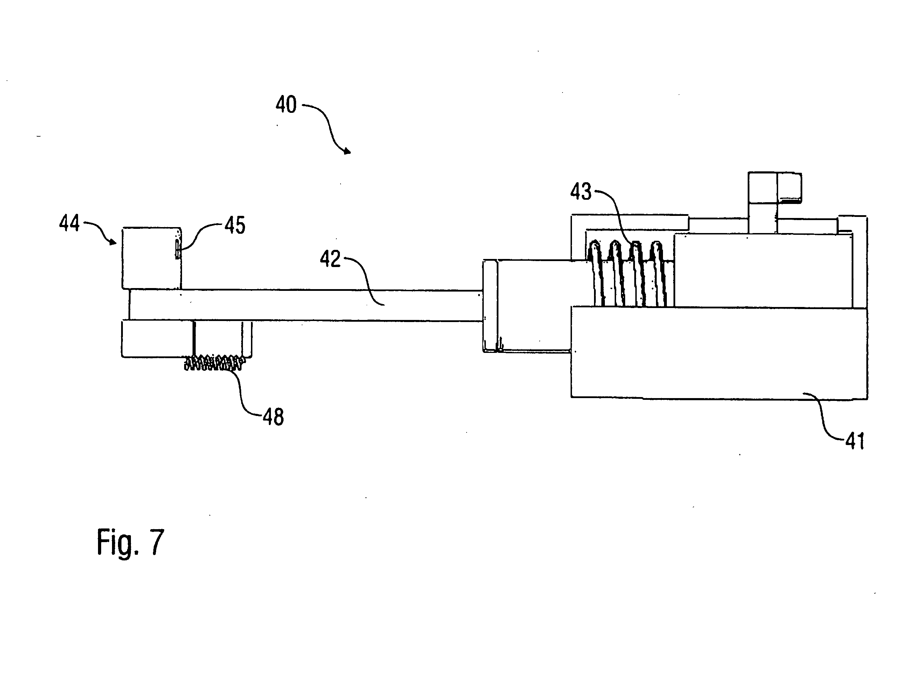

Die Figuren 6 und 7 zeigen ein alternatives Ausführungsbeispiel eines nicht erfindungsgemäßen Applikators 40, der zur Applikation der Dichtmasse 7 auf die Bördelnaht 1 (vgl. Fig. 10) eingesetzt werden kann.

Der Applikator 40 besteht im Wesentlichen aus einem Grundkörper 41 und einen hohlen Arm 42, wobei der Arm 42 durch ein Gelenk in dem Grundkörper 41 translatorisch in dem Grundkörper 41 verschoben werden kann.

Eine Spiralfeder 43 stellt den Arm 42 hierbei in eine Neutralstellung relativ zu dem Grundkörper 41 zurück, wenn keine äußeren Kräfte auf den Arm 42 wirken.

An seinem distalen Ende trägt der Arm 42 einen schwenkbaren Applikationskopf 44 mit einer Düse 45 und einer Gleitfläche 46, die im Betrieb auf der Rückseite 29 (vgl. Fig. 10) der Bördelnaht gleitet.

Darüber hinaus weist der Applikationskopf 44 in Gleitrichtung vor der Gleitfläche 46 eine angewinkelte Auflauffläche 47 auf, die gegenüber der Gleitfläche 46 um 30° angewinkelt ist und dafür sorgt, dass sich der Applikationskopf 44 an Konturen auf der Rückseite 29 der Bördelnaht 1 anpasst.

Ferner weist der Applikator 40 eine Spiralfeder 48 auf, die den Applikationskopf 44 ohne äußere Kräfte in eine vorgegebene Neutralstellung zurückstellt.

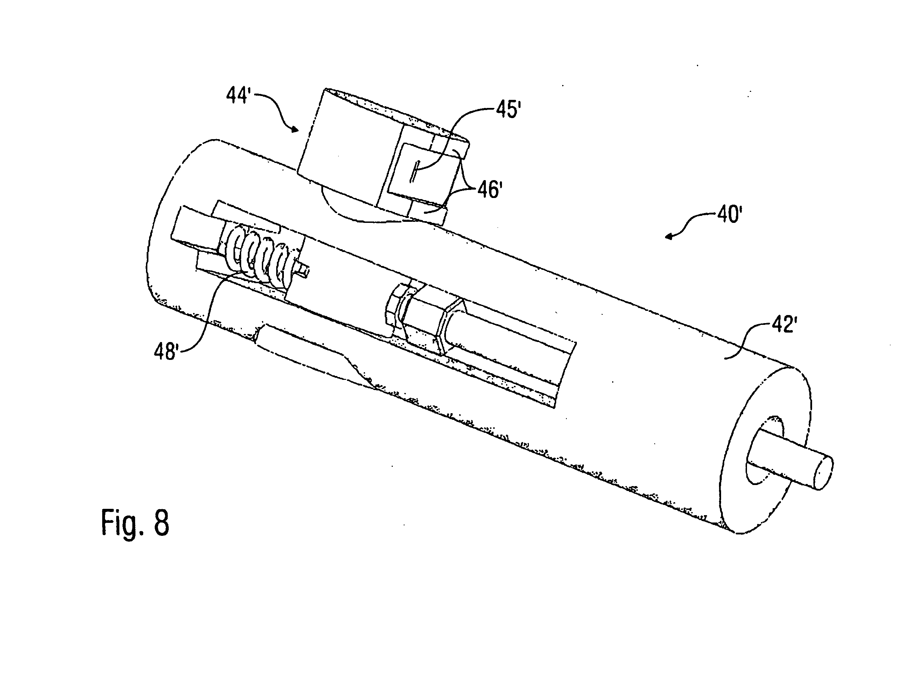

Das Ausführungsbeispiel gemäß Figur 8 stimmt weitgehend mit den vorstehend geschriebenen und in den Figuren 6 und 7 dargestellten Ausführungsbeispiel überein, so dass zur Vermeidung von Wiederholungen auf die vorstehende Beschreibung Bezug genommen wird, wobei für entsprechende Einzelheiten im Folgenden die selben Bezugszeichen verwendet werden, die lediglich zur Unterscheidung mit einem Apostroph gekennzeichnet sind.

Eine Besonderheit dieses Ausführungsbeispiels besteht darin, dass die Feder 48' zur Rückstellung des Applikationskopfs 44' innerhalb des hohlen Arms 42' angeordnet ist.

Eine weitere Besonderheit besteht hierbei darin, dass der hohle Arm 42' hierbei einen kreisförmigen Querschnitt aufweist.

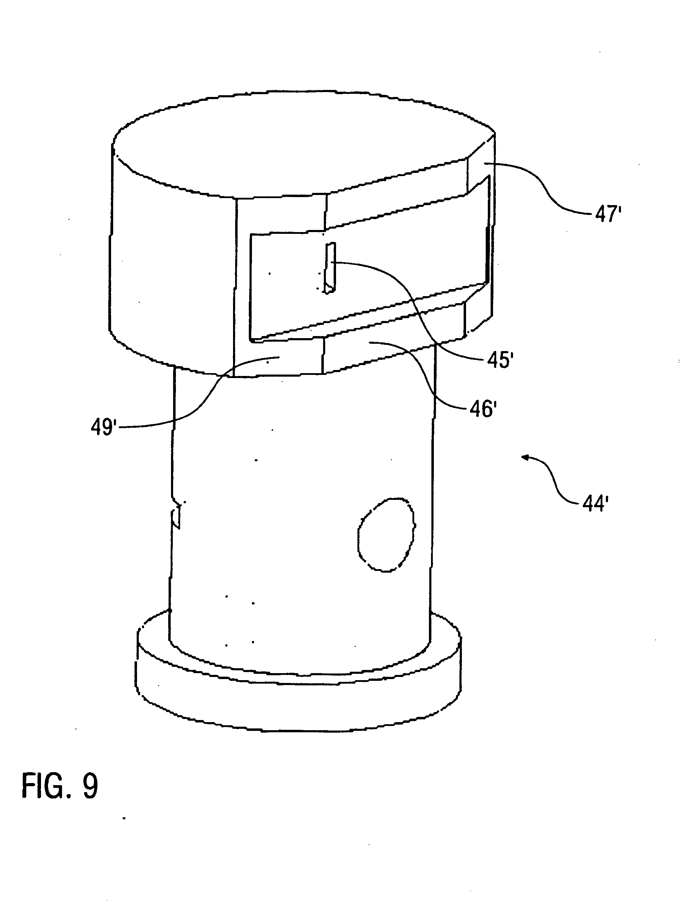

Figur 9 zeigt schließlich eine perspektivische Detaildarstellung des Applikationskopfs 44' aus Figur 8, wobei zusätzlich zu erkennen ist, dass auch im Gleitrichtung hinter der Gleitfläche 46 eine Auflauffläche 49' angeordnet ist.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen.

### Bezugszeichenliste:

- 1: Bördelnaht
- 2: Blechbeplankung
- 3: Klebstoffschicht
- 4: Blechkante
- 5: Innenblech
- 6: Blechkante
- 7: Dichtmasse
- 8: Applikator
- 9: Applikationswerkzeug
- 10: Toleranzausgleich
- 11: Befestigungsflansch
- 12: Befestigungsflansch
- 13: Verbindungsstück
- 14: Befestigungsflansch
- 15: Bohrungen
- 16: Materialsteg
- 17: Andruckwippe
- 18: Drehkörper
- 19: Bohrung
- 20: Bohrung
- 21: Bohrung
- 22: Düsenrohr
- 23: Proximaler Rohrabschnitt
- 24: Distaler Rohrabschnitt
- 25: Düse
- 26: Andruckrolle
- 27: Andruckrolle
- 28: Vorderseite
- 29: Rückseite
- 30: Spiralfeder
- 31: Dichtring
- 32: Dichtring
- 33: Applikator
- 34: Grundkörper
- 35: Düsenrohr
- 36: Proximaler Rohrabschnitt
- 37: Distaler Rohrabschnitt
- 38: Düse
- 39: Spiralfeder
- 40: Applikator
- 41: Grundkörper
- 42: Arm
- 43: Spiralfeder
- 44, 44': Applikationskopf
- 45, 45': Düse
- 46, 46': Gleitfläche
- 47, 47': Auflauffläche
- 48, 48': Spiralfeder
- 49': Auflauffläche

## Patentansprüche

1. Applikator (8; 33; 40; 40') zur Applikation einer Dichtmasse (7) auf eine Bördelnaht (1) an einer Innenseite eines Kraftfahrzeug-Karosseriebauteils (2, 5) in Form einer Tür oder einer Haube einer Kraftfahrzeugkarosserie, wobei die Dichtmasse (7) von einer Außenseite des Kraftfahrzeug-Karosseriebauteils (2, 5) zugeführt wird, mit
a) einer Düse (25; 38; 45; 45') zur Abgabe der Dichtmasse (7) auf die Bördelnaht (1) an der Innenseite des Kraftfahrzeug-Karosseriebauteils (2, 5), und
b) einem Düsenrohr (22; 35) mit einem proximalen Rohrabschnitt (23; 36) und einem distalen Rohrabschnitt (24; 37), wobei der distale Rohrabschnitt (24; 37) gegenüber dem proximalen Rohrabschnitt (23; 36) angewinkelt ist, um das zu beschichtende Kraftfahrzeug-Karosseriebauteil (2, 5) zu hintergreifen, während die Düse (25; 38; 45; 45') in dem distalen Rohrabschnitt (24; 37) angeordnet und nach innen gerichtet ist, um das KraftfahrzeugKarosseriebauteil von hinten zu beschichten, sowie mit
c) einem Grundkörper (14; 34; 41), der im Betrieb von einem mehrachsigen Roboter geführt wird,
**gekennzeichnet durch**
d) ein nachgiebiges Drehgelenk (10, 17, 18), das kinematisch zwischen dem Grundkörper (14; 34; 41) und der Düse (25; 38; 45; 45') angeordnet ist und eine Ausweichbewegung der Düse (25; 38; 45; 45') relativ zu dem Grundkörper (14; 34; 41) erlaubt,
e) wobei die rotatorische Ausweichbewegung der Düse (25; 38; 45; 45') in einer Drehebene erfolgt, die im Wesentlichen rechtwinklig ausgerichtet ist in Bezug auf den distalen Rohrabschnitt (24; 37) des Düsenrohrs (22; 35).

2. Applikator (8; 33; 40; 40') nach Anspruch 1, **gekennzeichnet durch**
a) ein Federelement (30; 39; 43; 48; 48'), welches das Gelenk und damit die Düse (25; 38; 45; 45') in eine vorgegebene Neutralstellung relativ zu dem Grundkörper (14; 34; 41) zurückstellt, und/oder
b) mindestens eine drehbare Andruckrolle (26, 27), die im Betrieb auf dem zu beschichtenden Kraftfahrzeug-Karosseriebauteil (5) abrollt, oder
c) mindestens eine Gleitfläche (46; 46'), die im Betrieb auf dem zu beschichtenden Kraftfahrzeug-Karosseriebauteil (2) gleitet.

3. Applikator (8) nach Anspruch 2,
**dadurch gekennzeichnet,**
a) **dass** die Andruckrolle (26, 27) aus Kunststoff besteht oder einen Kunststoffüberzug aufweist, und/oder
b) **dass** die Andruckrolle (26, 27) und das Gelenk (17, 18) Drehachsen aufweisen, die im Wesentlichen parallel verlaufen, und/oder
c) **dass** die Andruckrolle (26, 27) und die Düse (25) starr miteinander verbunden sind und durch das Gelenk (17, 18) gemeinsam relativ zu dem Grundkörper (14) schwenkbar sind.

4. Applikator (8) nach einem der vorhergehenden Ansprüche, **gekennzeichnet durch** eine Andruckwippe (17), die **durch** das Gelenk (18) um eine vorgegebene Drehachse schwenkbar an dem Grundkörper (14) angebracht ist und die Düse (25) sowie beiderseits der Drehachse jeweils mindestens eine Andruckrolle (26, 27) trägt, wobei die Andruckrollen (26, 27) eine gemeinsame Abrollfläche bilden.

5. Applikator (33; 40; 40') nach Anspruch 2, **dadurch gekennzeichnet, dass** die Gleitfläche (46, 46') in Gleitrichtung vorne und/oder hinten eine angewinkelte Auflauffläche (47; 47', 49') aufweist, um Oberflächenkonturen des zu beschichtenden Bauteils (2) auszugleichen.

6. Applikator (8) nach einem der vorhergehenden Ansprüche, **dadurch gekennzeichnet, dass** die Andruckwippe (17), die Andruckrolle (26, 27) und/oder das Gelenk (18) die Düse (25) im Betrieb in einer vorgegebenen räumlichen Ausrichtung relativ zu der Oberfläche (29) des zu beschichtenden Bauteils (2, 5) halten.

7. Applikator (8; 33; 40; 40') nach einem der vorhergehenden Ansprüche, **dadurch gekennzeichnet,**
a) **dass** die Düse (25; 38; 45; 45') eine Austrittsrichtung aufweist, die im Betrieb gegenüber der Oberfläche (29) des zu beschichtenden Bauteils (2, 5) einen bestimmten Anstellwinkel aufweist, wobei der Anstellwinkel im Bereich zwischen 10° und 90° liegt, und/oder
b) **dass** die Düse eine Rundstrahldüse oder eine Extrusionsdüse ist, und/oder
c) **dass** verschiedene Düsen mit verschiedenen Düsenformen und/oder Düsenabmessungen vorgesehen sind, und/oder
d) **dass** das Düsenrohr auswechselbar und/oder im Wesentlichen L-förmig oder U-förmig und/oder mit einem stoßmindernden Überzug versehen ist.

8. Applikator (33; 40; 40') nach einem der vorhergehenden Ansprüche, **gekennzeichnet durch**
a) einen hohlen Arm (42) und
b) einen Düsenkopf (44; 44'), der an dem Arm (42) schwenkbar angebracht ist und die Düse (45; 45') enthält.

9. Applikator (33; 40; 40') nach Anspruch 8,
**dadurch gekennzeichnet,**
a) **dass** in dem hohlen Arm (42; 42') ein Beschichtungsmittelschlauch zu dem Düsenkopf (44) verläuft, und/oder
b) **dass** das Federelement (48') zur Rückstellung des Düsenkopfs (44') in dem hohlen Arm (42') angebracht ist, oder
c) **dass** das Federelement (48) zur Rückstellung des Düsenkopfs (44) außen an dem hohlen Arm (42) angebracht ist.

10. Applikator (33; 40; 40') nach einem der vorhergehenden Ansprüche, **gekennzeichnet durch** eine Beschichtungsmittelzuführung, die innerhalb des Grundkörpers verläuft.

11. Applikator (8; 33; 40; 40') nach einem der vorhergehenden Ansprüche, **dadurch gekennzeichnet, dass** das Gelenk eine translatorische Ausweichbewegung der Düse relativ zu dem Grundkörper erlaubt.

12. Applikator (8; 33; 40; 40') nach Anspruch 11,
**dadurch gekennzeichnet,**
a) **dass** die erste translatorische Ausweichbewegung der Düse (25; 38; 45; 45') im Wesentlichen rechtwinklig ausgerichtet ist in Bezug auf
a1) die Oberfläche (29) des zu beschichtenden Bauteils (2, 5) und/oder
a2) die Abrollfläche der Andruckrollen (26, 27) und/oder
a3) den distalen Rohrabschnitt (24; 37) des Düsenrohrs (22; 35),
b) **dass** die zweite translatorische Ausweichbewegung der Düse (25; 38; 45; 45') im Wesentlichen parallel ausgerichtet ist in Bezug auf
b1) die Oberfläche (29) des zu beschichtenden Bauteils (2, 5) und/oder
b2) die Abrollfläche der Andruckrollen (26, 27) und/oder
b3) den distalen Rohrabschnitt (24; 37) des Düsenrohrs (22; 35).

13. Beschichtungsroboter mit einem Applikator (8; 33; 40; 40') nach einem der vorhergehenden Ansprüche.

14. Verfahren zur Applikation (7) einer Dichtmasse auf eine Bördelnaht (1) an einer Innenseite eines Kraftfahrzeugkarosseriebauteils (2, 5) in Form einer Tür oder einer Haube einer Kraftfahrzeugkarosserie, mit den folgenden Schritten:
a) Bewegen eines Applikators (8; 33; 40; 40') mit einer Düse und einem Grundkörper entlang der abzudichtenden Bördelnaht (1) an dem zu beschichtenden Kraftfahrzeug-Karosseriebauteil (2, 5),
a1) wobei der Grundkörper (14; 34; 41) von einem mehrachsigen Roboter geführt wird, und
a2) der Applikator ein Düsenrohr (22; 35) mit einem proximalen Rohrabschnitt (23; 36) und einem distalen Rohrabschnitt (24; 37) aufweist,
a3) während der distale Rohrabschnitt (24; 37) gegenüber dem proximalen Rohrabschnitt (23; 36) angewinkelt ist, um das zu beschichtende Kraftfahrzeug-Karosseriebauteil (2, 5) zu hintergreifen,
a4) wobei die Düse (25; 38; 45; 45') in dem distalen Rohrabschnitt (24; 37) angeordnet und nach innen gerichtet ist, um das Kraftfahrzeug-Karosseriebauteil von hinten zu beschichten,
b) Applizieren der Dichtmasse aus der Düse des Applikators (8; 33; 40; 40') auf die Bördelnaht an der Innenseite des Kraftfahrzeug-Karosseriebauteils (2, 5), wobei die Dichtmasse (7) von der Außenseite des Kraftfahrzeug-Karosseriebauteils (2, 5) zugeführt wird,
**dadurch gekennzeichnet, dass**
c) die Düse mittels eines nachgiebigen Drehgelenks eine Ausweichbewegung relativ zu dem Grundkörper ausführt, und
d) die rotatorische Ausweichbewegung der Düse (25; 38; 45; 45') in einer Drehebene erfolgt, die im Wesentlichen rechtwinklig ausgerichtet ist in Bezug auf den distalen Rohrabschnitt (24; 37) des Düsenrohrs (22; 35).

15. Verfahren nach Anspruch 14, **dadurch gekennzeichnet, dass** die Düse mittels einer Feder in eine Neutralstellung relativ zu dem Grundkörper zurückgestellt wird.

16. Verfahren nach einem der Ansprüche 14 bis 15, **gekennzeichnet durch** folgenden Schritt:
Anpressen des Applikators (8; 33; 40; 40') auf die Oberfläche des zu beschichtenden Bauteils während der Applikator bewegt wird und während die Dichtmasse appliziert wird.

17. Verfahren nach einem der Ansprüche 14 bis 16,
**dadurch gekennzeichnet,**
a) **dass** die Dichtmasse auf die Bördelnaht aufgetragen wird, während die Tür oder Haube geschlossen ist,
b) **dass** die Düse (25) durch einen Karosseriespalt hindurch von der Außenseite auf die Innenseite der Tür oder Haube geführt wird, und/oder
c) **dass** die Düse (25) um eine Kante der Tür oder der Haube herum von der Außenseite auf die Innenseite der Tür oder Haube geführt wird, und/oder
d) **dass** die Dichtmasse mit einem bestimmten Anstellwinkel relativ zu der Oberfläche des zu beschichtenden Bauteils appliziert wird, wobei der Anstellwinkel im Bereich zwischen 10° und 90° liegt.

18. Verfahren nach einem der Ansprüche 14 bis 17,
**dadurch gekennzeichnet,**
a) **dass** der Applikator (8; 33; 40; 40') mit einer bestimmten Positionierungstoleranz bewegt wird,
b) **dass** das Gelenk einen bestimmten Toleranzausgleich ermöglicht, und
c) **dass** der Toleranzausgleich größer ist als die Positionierungstoleranz.

19. Verfahren nach einem der Ansprüche 14 bis 18,
**dadurch gekennzeichnet,**
a) **dass** der Applikator (8; 33; 40; 40') von einem mehrachsigen Roboter bewegt wird, und/oder
b) **dass** die Andruckwippe (17), die Andruckrolle (26, 27) und/oder das Gelenk (10, 17, 18) die Düse (25) in einer vorgegebenen räumlichen Ausrichtung relativ zu der Oberfläche (29) des zu beschichtenden Bauteils (2, 5) halten.

20. Verwendung eines Applikators (8; 33; 40; 40') nach einem der Ansprüche 1 bis 13 zur Applikation eines Dichtmittels (7) auf eine Bördelnaht (1) eines Kraftfahrzeug-Karosseriebauteils (2, 5).

## Claims

1. An applicator (8; 33; 40; 40') for applying a coating agent (7), in particular a sealant, to a component, in particular to a flanged seam (1) of a motor vehicle body component (2, 5), comprising
a) a nozzle (25; 38; 45; 45') for supplying the coating agent (7) to the component (2, 5) and
b) a nozzle pipe (22; 35) with a proximal pipe section (23; 36) and a distal pipe section (24; 37), wherein the distal pipe section (24; 37) is at an angle to the proximal pipe section (23; 36), in order to grip the component (2, 5) to be coated from behind, whilst the nozzle (25; 38; 45; 45') is located in the distal pipe section (24; 37) and directed inwards in order to coat the component from behind, and with
c) a base body (14; 34; 41) which is guided by a multiple-axis robot in operation,
**characterized by**
d) an elastic swivel joint (10, 17, 18) which is located kinematically between the base body (14; 34; 41) and the nozzle (25; 38; 45; 45'), permitting an avoiding movement of the nozzle (25; 38; 45; 45') in relation to the base body (14; 34; 41),
e) wherein the rotary avoiding movement of the nozzle (25; 38; 45; 45') occurs in a rotation plane which is aligned substantially at right angles to the distal pipe section (24; 37) of the nozzle pipe (22; 35).

2. The applicator (8; 33; 40; 40') according to claim 1, **characterized by**
a) a spring element (30; 39; 43; 48; 48') which returns the joint and thus the nozzle (25; 38; 45; 45') to a specified neutral position in relation to the base body (14; 34; 41), and/or
b) at least one rotatable contact pressure roller (26, 27) which rolls on the component to be coated (5) in operation, or
c) at least one sliding surface (46, 46') which slides on the component to be coated (2).

3. The applicator (8) according to claim 2,
**characterized in that**
a) the contact pressure roller (26, 27) consists of plastic or has a plastic coating, and/or
b) the contact pressure roller (26, 27) and the joint (17, 18) have axes of rotation which extend substantially parallel, and/or
c) the contact pressure roller (26, 27) and the nozzle (25) are rigidly connected with each other and may be swivelled in relation to the base body (14) by the joint (17, 18).

4. The applicator (8) according to any one of the preceding claims, **characterized in that** a pressure rocker (17) is attached by the joint (18) to the base body (14) so that it will swivel about a specified axis of rotation and bears the nozzle (25) and at least one contact pressure roller (26, 27) each on both sides of the axis of rotation, wherein the contact pressure rollers (26, 27) form a common rolling surface.

5. The applicator (33; 40; 40') according to claim 2, **characterized in that** the sliding surface (46, 46') has an angled ramp (47; 47', 49') at the front and/or rear in the direction of sliding to compensate for surface contours of the component to be coated (2).

6. The applicator (8) according to any one of the preceding claims, **characterized in that** the pressure rocker (17), the contact pressure roller (26, 27) and/or the joint (18) hold the nozzle (25) in operation at a specific physical alignment in relation to the surface (29) of the component (2, 5) to be coated.

7. The applicator (8; 33; 40; 40') according to any one of the preceding claims, **characterized in**
a) **that** the nozzle (25; **38;** 45; 45') has a discharge direction at a specific angle in operation in relation to the surface (29) of the component (2, 5) to be coated, wherein the angle is in a range between 10° and 90°, and/or
b) **that** the nozzle is a round spray nozzle or an extrusion nozzle, and/or
c) **that** different nozzles with different nozzle shapes and/or dimensions are provided, and/or
d) **that** the nozzle pipe is interchangeable and/or substantially L- or U-shaped and/or has a shock-absorbing coating.

8. The applicator (33; 40; 40') according to any one of the preceding claims, **characterized by**
a) a hollow arm (42) and
b) a nozzle head (44; 44') attached to the arm (42) so that it will swivel and containing the nozzle (45; 45').

9. The applicator (33; 40; 40') according to claim 8, **characterized in**
a) **that** a coating agent hose extends in the hollow arm (42, 42') to the nozzle head (44), and/or
b) **that** the spring element (48') for resetting the nozzle head (44') is located in the hollow arm (42'), or
c) **that** the spring element (48) for resetting the nozzle head (44) is located on the outside of the hollow arm (42).

10. The applicator (33; 40; 40') according to any one of the preceding claims, **characterized in that** a coating agent feed system extends inside the base body.

11. The applicator (8; 33; 40; 40') according any one of the preceding claims, **characterized in that** the joint permits at least one rotary avoiding movement and/or at least one translational avoiding movement of the nozzle in relation to the base body.

12. The applicator (8; 33; 40; 40') according to claim 11, **characterized in**
a) **that** the first translational avoiding movement of the nozzle (25; 38; 45; 45') is aligned substantially at right angles to
a1) the surface (29) of the component (2, 5) to be coated and/or
a2) the rolling surface of the contact pressure rollers (26, 27) and/or
a3) the distal pipe section (24; 37) of the nozzle pipe (22; 35),
b) **that** the second translational avoiding movement of the nozzle (25; 38; 45; 45') is aligned substantially parallel to
b1) the surface (29) of the component (2, 5) to be coated and/or
b2) the rolling surface of the contact pressure rollers (26, 27) and/or
b3) the distal pipe section (24; 37) of the nozzle pipe (22; 35).

13. A coating robot comprising an applicator (8; 33; 40; 40') according to any one of the preceding claims.

14. A method of applying a coating agent (7), in particular a sealant, to a component (2, 5) to be coated, in particular to a flanged seam (1) of a motor vehicle body component, comprising the following steps:
a) Moving an applicator (8; 33; 40; 40') with a nozzle and a base body along the component to be coated,
a1) wherein the base body (14; 34; 41) is guided by a multi-axis robot, and
a2) the applicator comprises a nozzle pipe (22; 35) with a proximal pipe section (23; 36) and a distal pipe section (24; 37),
a3) while the distal pipe section (23; 36) is angled with regard to the proximal pipe section (23; 36) for engaging the motor vehicle body component to be coated from behind,
a4) wherein the nozzle (25; 38; 45; 45') is arranged in the distal pipe section (24; 37) and directed inwards to coat the motor vehicle body component from behind,
b) Applying the coating agent to the component from the nozzle of the applicator (8; 33; 40; 40'),
**characterized in that**
c) the nozzle carries out an avoiding movement in relation to the base body by means of an elastic swivel joint, and
d) the rotary avoiding movement of the nozzle (25; 38; 45; 45') occurs in a rotation plane which is aligned substantially at right angles to the distal pipe section (24; 37) of the nozzle pipe (22; 35).

15. The method according to claim 14, **characterized in that** the nozzle is returned to a neutral position in relation to the base body by a spring.

16. The method according to any one of claims 14 to 15, **characterized by** the following step:
Pressing the applicator (8; 33; 40; 40') against the surface of the component to be coated while the applicator is being moved and while the coating agent is being applied.

17. The method according to any one of claims 14 to 16, **characterized in**
a) **that** a flanged seam on the inside of a door or bonnet on a motor vehicle body is sealed with a sealant, and
b) **that** the sealant is applied to the flanged seam while the door or bonnet is closed;
c) **that** the sealant is fed from the outside of the door or bonnet, and/or
d) **that** the nozzle (25) is guided through a gap in the body from the outside to the inside of the door or the bonnet, and/or
e) **that** the nozzle (25) is guided around an edge of the door or bonnet from the outside to the inside of the door or bonnet, and/or
f) **that** the coating agent is applied at a predetermined angle to the surface of the component to be coated, said angle being in the range between 10° and 90°.

18. The method according to any one of claims 14 to 17, **characterized in**
a) **that** the applicator (8; 33; 40; 40') is moved with a predetermined positional tolerance;
b) **that** the joint facilitates a predetermined tolerance compensation and
c) **that** tolerance compensation is greater than the positional tolerance.

19. The method according to any one of claims 14 to 18, **characterized in**
a) **that** the applicator (8; 33; 40; 40') is moved by a multiple-axis robot, and/or
b) **that** the pressure rocker (17), the contact pressure roller (26, 27) and/or the joint (10, 17, 18) hold the nozzle (25) in a specific physical alignment in relation to the surface (29) of the component (2, 5) to be coated.

20. Use of an applicator (8; 33; 40; 40') according to any one of claims 1 to 13 for applying a sealant (7) to a flanged seam (1) of a motor vehicle body component (2, 5).

## Revendications

1. Applicateur (8 ; 33 ; 40 ; 40') pour l'application d'une masse d'étanchéité (7) sur un joint serti (1) à l'intérieur d'un composant de carrosserie de véhicule automobile (2, 5) sous la forme d'une portière ou d'un capot d'une carrosserie de véhicule automobile, la masse d'étanchéité (7) étant alimentée par l'extérieur du composant de carrosserie de véhicule automobile (2, 5), avec
a) une buse (25 ; 38 ; 45 ; 45') pour la distribution de la masse d'étanchéité (7) sur le joint serti (1) à l'intérieur du composant de carrosserie de véhicule automobile (2, 5), et
b) un tube de buse (22 ; 35) avec une portion de tube proximale (23 ; 36) et une portion de tube distale (24 ; 37), la portion de tube distale (24 ; 37) formant un angle avec la portion de tube proximale (23 ; 36), pour agripper par derrière le composant de carrosserie de véhicule automobile (2, 5) à revêtir, tandis que la buse (25 ; 38 ; 45 ; 45') est disposée dans la portion de tube distale (24 ; 37) et orientée vers l'intérieur, pour revêtir le composant de carrosserie de véhicule automobile par l'arrière, ainsi qu'avec
c) un corps de base (14 ; 34 ; 41) qui est guidé lors du fonctionnement par un robot multi-axe,
**caractérisé par**
d) une articulation rotative flexible (10, 17, 18) qui est disposée de manière cinématique entre le corps de base (14 ; 34 ; 41) et la buse (25 ; 38 ; 45 ; 45') et qui permet un mouvement d'écartement de la buse (25 ; 38 ; 45 ; 45') par rapport au corps de base (14; 34; 41),
e) le mouvement d'écartement rotatif de la buse (25 ; 38 ; 45 ; 45') ayant lieu dans un plan de rotation qui est orienté globalement perpendiculairement par rapport à la portion de tube distale (24 ; 37) du tube de buse (22 ; 35).

2. Applicateur (8 ; 33 ; 40 ; 40') selon la revendication 1,
**caractérisé par**
a) un élément à ressort (30 ; 39 ; 43 ; 48 ; 48') qui rappelle l'articulation et donc la buse (25 ; 38 ; 45 ; 45') vers une position neutre prédéterminée par rapport au corps de base (14 ; 34 ; 41), et/ou
b) au moins un rouleau de pression rotatif (26, 27) qui roule, lors du fonctionnement, sur le composant de carrosserie de véhicule automobile (5), ou
c) au moins une surface de glissement (46 ; 46') qui glisse, lors du fonctionnement, sur le composant de carrosserie de véhicule automobile (2) à revêtir.

3. Applicateur (8) selon la revendication 2,
**caractérisé en ce que**
a) le rouleau de pression (26, 27) est constitué d'une matière plastique ou comprend un revêtement en matière plastique, et/ou
b) le rouleau de pression (26, 27) et l'articulation (17, 18) comprennent des axes de rotation qui s'étendent globalement parallèlement, et/ou
c) le rouleau de pression (26, 27) et la buse (25) sont reliés entre eux de manière rigide et peuvent être pivotés ensemble par rapport au corps de base (14) par l'intermédiaire de l'articulation (17, 18).

4. Applicateur (8) selon l'une des revendications précédentes,
**caractérisé par** une bascule de pression (17) qui est montée sur le corps de base (14) de façon à pouvoir être pivotée autour d'un axe de rotation prédéterminé par l'intermédiaire de l'articulation (18) et qui supporte la buse (25) ainsi qu'au moins un rouleau de pression (26, 27) sur chacun des côtés de l'axe de rotation, les rouleaux de pression (26, 27) formant une surface de roulement commune.

5. Applicateur (33 ; 40 ; 40') selon la revendication 2, **caractérisé en ce que** la surface de glissement (46, 46') comprend, devant ou derrière dans la direction de glissement, une surface d'application (47 ; 47', 49') formant un angle afin de compenser les surfaces des contours du composant à revêtir (2).

6. Applicateur (8) selon l'une des revendications précédentes, **caractérisé en ce que** la bascule de pression (17), le rouleau de pression (26, 27) et/ou l'articulation (18) maintiennent la buse (25), lors du fonctionnement, dans une orientation spatiale prédéterminée par rapport à la surface (29) du composant à revêtir (2, 5).

7. Applicateur (8 ; 33 ; 40 ; 40') selon l'une des revendications précédentes, **caractérisé en ce que**
a) la buse (25 ; 38 ; 45 ; 45') présente une direction de sortie qui forme, lors du fonctionnement, un angle d'attaque déterminé par rapport à la surface (29) du composant à revêtir (2, 5), l'angle d'attaque étant, lors du fonctionnement, entre 10° et 90°, et/ou
b) la buse est une buse à jet rond ou une buse d'extrusion, et/ou
c) différentes buses avec des formes et/ou des dimensions différentes sont prévues, et/ou
d) le tube de buse est interchangeable et/ou présente globalement une forme de L ou une forme de U et/ou est muni d'un revêtement réduisant les chocs.

8. Applicateur (33 ; 40 ; 40') selon l'une des revendications précédentes, **caractérisé par**
a) un bras creux (42) et
b) une tête de buse (44 ; 44') qui est montée de manière pivotante sur le bras (42) et qui contient la buse (45 ; 45').

9. Applicateur (33 ; 40 ; 40') selon la revendication 8,
**caractérisé en ce que**
a) dans le bras creux (42 ; 42'), s'étend un tuyau de produit de revêtement vers la tête de buse (44), et/ou
b) l'élément à ressort (48') pour le rappel de la tête de buse (44') est monté dans le bras creux (42'), ou
c) l'élément à ressort (48) pour le rappel de la tête de buse (44) est monté à l'extérieur sur le bras creux (42).

10. Applicateur (33; 40; 40') selon l'une des revendications précédentes, **caractérisé par** une alimentation de produit de revêtement qui s'étend à l'intérieur du corps de base.

11. Applicateur (8 ; 33 ; 40 ; 40') selon l'une des revendications précédentes, **caractérisé en ce que** l'articulation permet un mouvement d'écartement en translation de la buse par rapport au corps de buse.

12. Applicateur (8 ; 33 ; 40 ; 40') selon la revendication 11,
**caractérisé en ce que**
a) le premier mouvement d'écartement en translation de la buse (25 ; 38 ; 45' ; 45') est orienté globalement perpendiculairement par rapport
a1) à la surface (29) du composant à revêtir (2, 5), et/ou
a2) à la surface de roulement des rouleaux de pression (26, 27), et/ou
a3) la portion de tube distale (24 ; 37) du tube de buse (22 ; 35),
b) le deuxième mouvement d'écartement en translation de la buse (25 ; 38 ; 45 ; 45') est orienté globalement parallèlement
b1) à la surface (29) du composant à revêtir (2, 5), et/ou
b2) à la surface de roulement des rouleaux de pression (26, 27), et/ou
b3) la portion de tube distale (24 ; 37) du tube de buse (22 ; 35).

13. Robot de revêtement avec un applicateur (8 ; 33 ; 40 ; 40') selon l'une des revendications précédentes.

14. Procédé d'application (7) d'une masse d'étanchéité sur un joint serti (1) à l'intérieur d'un composant de carrosserie de véhicule automobile (2, 5) sous la forme d'une portière ou d'un capot d'une carrosserie de véhicule automobile, avec les étapes suivantes :
a) déplacement d'un applicateur (8 ; 33 ; 40 ; 40') avec une buse et un corps de base le long du joint serti (1) à étanchéifier sur le composant de carrosserie de véhicule automobile (2, 5),
a1) le corps de base (14 ; 34 ; 41) étant guidé par un robot multi-axe, et
a2) l'applicateur comprenant un tube de buse (22 ; 35) avec une portion de tube proximale (23 ; 36) et une portion de tube distale (24 ; 37),
a3) tandis que la portion de tube distale (24 ; 37) forme un angle par rapport à la portion de tube proximale (23 ; 36) afin d'agripper par derrière le composant de carrosserie de véhicule automobile (2, 5) à revêtir,
a4) la buse (25 ; 38 ; 45 ; 45') étant disposée dans la portion de tube distale (24 ; 37) et orientée vers l'intérieur, afin de revêtir le composant de carrosserie de véhicule automobile par l'arrière,
b) application de la masse d'étanchéité provenant de la buse de l'applicateur (8 ; 33 ; 40 ; 40') sur le joint serti à l'intérieur du composant de carrosserie de véhicule automobile (2, 5), la masse d'étanchéité (7) étant introduite à partir de l'extérieur du composant de carrosserie de véhicule automobile (2, 5),
**caractérisé en ce que**
c) la buse effectue, à l'aide d'une articulation rotative flexible, un mouvement d'écartement par rapport au corps de base, et
d) le mouvement d'écartement rotatif de la buse (25 ; 38 ; 45 ; 45') a lieu dans un plan de rotation, qui est orienté globalement perpendiculairement par rapport à la portion de tube distale (24 ; 37) du tube de buse (22 ; 35).

15. Procédé selon la revendication 14, **caractérisé en ce que** la buse est rappelée à l'aide d'un ressort vers une position neutre par rapport au corps de base.

16. Procédé selon l'une des revendications 14 à 15, **caractérisé par** l'étape suivante :
compression de l'applicateur (8 ; 33 ; 40 ; 40') sur la surface du composant à revêtir pendant que l'applicateur est déplacé et pendant que la masse d'étanchéité est appliquée.

17. Procédé selon l'une des revendications 14 à 16,
**caractérisé en ce que**
a) la masse d'étanchéité est appliquée sur le joint serti pendant que la portière ou le capot est fermé,
b) la buse (25) est guidée à travers un interstice de carrosserie de l'extérieur vers l'intérieur de la portière ou du capot, et/ou
c) la buse (25) est guidée autour d'une arête de la portière ou du capot de l'extérieur vers l'intérieur de la portière ou du capot, et/ou
d) la masse d'étanchéité est appliquée avec un angle d'attaque déterminé par rapport à la surface du composant à revêtir, l'angle d'attaque étant de l'ordre de 10° à 90°.

18. Procédé selon l'une des revendications 14 à 17,
**caractérisé en ce que**
a) l'applicateur (8 ; 33 ; 40 ; 40') est déplacé avec une tolérance de positionnement déterminée,
b) l'articulation permet une compensation de tolérance déterminée, et
c) la compensation de tolérance est supérieure à la tolérance de positionnement.

19. Procédé selon l'une des revendications 14 à 18,
**caractérisé en ce que**
a) l'applicateur (8 ; 33 ; 40 ; 40') est déplacé par un robot multi-axe, et/ou
b) la bascule de pression (17), le rouleau de pression (26, 27) et/ou l'articulation (10, 17, 18) maintiennent la buse (25) dans une orientation spatiale déterminée par rapport à la surface (29) du composant à revêtir (2, 5).

20. Utilisation d'un applicateur (8 ; 33 ; 40 ; 40') selon l'une des revendications 1 à 13 pour l'application d'un produit d'étanchéité (7) sur un joint serti (1) d'un composant de carrosserie de véhicule automobile (2, 5).
